# EUROPÄISCHE PATENTSCHRIFT

(11) **EP 3 086 887 B1**
(45) Veröffentlichungstag und Bekanntmachung des Hinweises auf die Patenterteilung: **20.04.2022**
(21) Anmeldenummer: 14821524.7
(22) Anmeldetag: 04.12.2014
(51) Int. Cl.: G10K 9/22, G01S 7/521, G01S 15/931

(54) **VERFAHREN ZUM HERSTELLEN EINES ULTRASCHALLSENSORS FÜR EIN KRAFTFAHRZEUG**
METHOD FOR PRODUCING AN ULTRASONIC SENSOR FOR A MOTOR VEHICLE
PROCÉDÉ PERMETTANT DE PRODUIRE UN CAPTEUR À ULTRASONS POUR UN VÉHICULE AUTOMOBILE

(30) Priorität: 23.12.2013 DE 102013022061
(43) Veröffentlichungstag der Anmeldung: 02.11.2016
(73) Patentinhaber: Valeo Schalter und Sensoren GmbH, 74321 Bietigheim-Bissingen (DE)
(72) Erfinder: WEHLING, Hans-Wilhelm, 74321 Bietigheim-Bissingen (DE); HAMM, Wolfgang, 74321 Bietigheim-Bissingen (DE)
(74) Vertreter: Enge, Sebastian
(86) Internationale Anmeldenummer: PCT/EP2014/076559
(87) Internationale Veröffentlichungsnummer: WO 2015/096960

(56) Entgegenhaltungen:
- EP-A1- 2 660 627
- WO-A1-2012/032584
- DE-A1- 19 832 072
- DE-A1-102008 055 126
- DE-A1-102008 055 126
- DE-A1-102011 105 017
- DE-A1-102011 105 017

## Beschreibung

Die Erfindung betrifft ein Verfahren zum Herstellen eines Ultraschallsensors für ein Kraftfahrzeug, bei welchem für den Ultraschallsensor eine Membran zum Aussenden von Ultraschallsignalen in eine Senderichtung und ein Sensorgehäuse bereitgestellt werden, in und/oder an welchem die Membran befestigt wird, wobei das Sensorgehäuse eine in die Senderichtung der Membran weisende Frontseite und eine Rückseite aufweist, welche in eine zur Senderichtung entgegengesetzte rückwärtige Richtung weist, und wobei das Sensorgehäuse an der Frontseite mit einer frontseitigen Öffnung für die Membran ausgebildet wird. Die Erfindung betrifft außerdem einen Ultraschallsensor für ein Kraftfahrzeug sowie ein Kraftfahrzeug mit einem solchen Ultraschallsensor.

Ultraschallsensoren für Kraftfahrzeuge sind bereits Stand der Technik und können in an sich bekannter Weise im Frontbereich und im Heckbereich eines Kraftfahrzeugs verbaut werden, wie beispielsweise an den Stoßfängern. Die Ultraschallsensoren sind Fahrerassistenzeinrichtungen zugeordnet und liefern Informationen über die Fahrzeugumgebung, und genauer gesagt über die Abstände zwischen dem Fahrzeug einerseits und den in seiner Umgebung befindlichen Hindernissen andererseits. Fahrerassistenzeinrichtungen können dabei beispielsweise Parkassistenzsysteme, Systeme zur Totwinkelüberwachung, Systeme zur Abstandshaltung, Bremsassistenzsysteme und dergleichen sein.

Es ist bereits bekannt, dass derartige Ultraschallsensoren in zugeordneten Verkleidungsteilen, beispielsweise in Stoßfängern, unverdeckt und somit sichtbar verbaut angeordnet sind. Dies bedeutet, dass sie in durchgängigen Aussparungen bzw. Durchgangsöffnungen in dem zugeordneten Verkleidungsteil des Fahrzeugs angeordnet sind und außenseitig sichtbar sind. Hier erstreckt sich die topfförmige Membran des Ultraschallsensors - der so genannte Aluminiumtopf - durch die Durchgangsöffnung des Verkleidungsteils hindurch, sodass eine Frontseite der Membran mit der äußeren Oberfläche des Verkleidungsteils bündig abschließt.

Darüber hinaus sind auch verdeckt verbaute Wandler bzw. Ultraschallsensoren bekannt. Diese sind somit bei einer Betrachtung des Verkleidungsteils von außen nicht sichtbar und durch das Verkleidungsteil verdeckt. Bei derartig verbauten Ultraschallsensoren direkt hinter dem Verkleidungsteil werden Ultraschallsignale durch das Material des Verkleidungsteils - üblicherweise Kunststoff - hindurch gesendet und empfangen.

Das Interesse richtet sich vorliegend insbesondere auf sichtbar und somit nicht-verdeckt verbaute Ultraschallsensoren, deren Membranen in einer durchgängigen Aussparung des zugeordneten Verkleidungsteils angeordnet sind. Ein solcher Ultraschallsensor wird üblicherweise mittels einer Halterung aus Kunststoff an dem Verkleidungsteil befestigt, wobei diese Halterung mit einem doppelseitigen Klebeband, warm verstemmt oder aber mit Ultraschall an dem Verkleidungsteil angebracht ist. Der Ultraschallsensor kann dann in die Halterung eingebracht und an dieser befestigt werden. Die Verwendung einer solchen Halterung zur sichtbaren Montage eines Ultraschallsensors an einem Stoßfänger ist beispielsweise aus dem Dokument DE 10 2007 043 500 A1 bekannt. Hier wird das Sensorgehäuse einschließlich der Membran in die Halterung eingerastet, welche direkt mit dem Stoßfänger verbunden ist.

Ein Verfahren zum Herstellen eines Ultraschallsensors ist beispielsweise aus der EP 2 027 580 B1 bekannt. Es wird eine erste Baugruppe gebildet, indem ein Piezoelement an einem Membranboden einer topfförmigen Membran befestigt wird. Diese erste Baugruppe wird dann zur Bildung einer zweiten Baugruppe in ein weichelastisches Entkopplungselement eingesetzt. Diese so gebildete zweite Baugruppe wird dann zur Bildung einer dritten Baugruppe rastend in einen Gehäuseabschnitt eines Sensorgehäuses des Ultraschallsensors eingesetzt. Das Entkopplungselement wird in einer Montagerichtung in den Gehäuseabschnitt eingesetzt, die zur Abstrahlrichtung des Ultraschallsensors entgegengesetzt ist.

Ein weiteres Verfahren beschreibt die DE 101 25 272 A1. Bei diesem Herstellungsverfahren wird die Membran des Ultraschallsensors zunächst in eine Zweikomponenten-Spritzanlage angelegt. In einem weiteren Arbeitsschritt wird ein Kunststoffgehäuse um die Membran gespritzt. Nachdem das Kunststoffgehäuse ausgehärtet ist, wird in einem weiteren Schritt ein gummiartiges Entkopplungselement zwischen die Membran und das Kunststoffgehäuse gespritzt. Somit wird eine exakte und dauerhafte Positionierung der Membran gegenüber dem Sensorgehäuse gewährleistet.

Ein bekanntes Verfahren, welches zum Herstellen eines Ultraschallsensors dient und dem Verfahren aus dem Dokument EP 2 027 580 B1 ähnelt, wird nachfolgend unter Bezugnahme auf Fig. 1 näher erläutert: Zunächst werden eine topfförmige Membran 1 sowie ein einstückiges Sensorgehäuse 2 für einen Ultraschallsensor 3 bereitgestellt. Die Membran 1 wird zunächst extern mit einem Oberflächenschutz versehen. Das Sensorgehäuse 2 ist von seiner in Senderichtung 4 der Membran 1 weisenden Frontseite 5 so ausgelegt, dass es die Membran 1 zusammen mit einem Entkopplungselement 6 aufnehmen kann. Dazu weist das Sensorgehäuse 2 eine frontseitige Öffnung 7 auf, durch welche eine Aufnahme für die Membran 1 und das Entkopplungselement 6 gebildet ist. Die Membran 1 weist einen umlaufenden Kragen 8 auf. In der Vormontage wird die Membran 1 zunächst in das Entkopplungselement 6 eingedrückt. Eine durch die Membran 1 und das Entkopplungselement 6 gebildete Einheit wird dann von der Frontseite 5 in das Sensorgehäuse 2 bzw. in die frontseitige Öffnung 7 lagerichtig montiert. Dann wird auf die Membran 1 ein zusätzlicher Entkopplungsring 19 mit angespritzter Silikonoberfläche aufgeschoben und mittels Laserschweißen mit dem Sensorgehäuse 2 fest mechanisch verbunden. In einer zweiten Montagelinie wird dann ein Piezoelement 9 durch eine rückseitige Montageöffnung 10 des Sensorgehäuses 2 in die Senderichtung 4 in einen Innenraum 11 des Sensorgehäuses 2 eingebracht und mithilfe eines Klebers an einer dem Innenraum 11 zugewandten Rückseite 12 eines Membranbodens 13 befestigt. Ein solches Verfahren bzw. die Wahl eines geeigneten Klebstoffs ist in dem Dokument DE 10 2011 120 391 A1 beschrieben. In einem weiteren Schritt werden in der zweiten Montagelinie Kontaktelemente 18, welche zu dem Piezoelement 9 führen sollen, abgebogen, und es wird eine Litze 17 angeschweißt, und die Stecker werden in der Senderichtung 4 in das Sensorgehäuse 2 eingepresst. Die Litze wird dabei durch die rückseitige Montageöffnung 10 in das Sensorgehäuse 2 eingebracht und dann mittels eines Lasers und Lots an das Piezoelement 9 angeschweißt. Dann wird der Innenraum der topfförmigen Membran 1 von der Rückseite und somit durch die rückseitige Montageöffnung 10 mit einem Verguß ausgefüllt, und der Ultraschallsensor wird für etwa 24 Stunden gealtert. In einer weiteren Montagelinie wird dann eine Leiterplatte durch die rückseitige Montageöffnung 10 auf Steckerstifte 14 aufgedrückt. Dazu wird die Schneid-Klemm-Technik genutzt. Der vorhandene Hohlraum bzw. der Innenraum 11 des Sensorgehäuses 2 wird schließlich mit einem Elektronikverguss durch die rückseitige Montageöffnung ausgefüllt und in einem Durchlaufofen ausgehärtet.

Das Dokument DE 10 2011 105017 betrifft ein Verfahren zum Herstellen eines Ultraschallsensors für ein Kraftfahrzeug, einen entsprechenden Ultraschallsensor und ein Kraftfahrzeug mit diesem Ultraschallsensor. Für den Ultraschallsensor wird eine Membran zum Aussenden von Ultraschallsignalen in eine Senderichtung und ein Sensorgehäuse bereitgestellt, in und/oder an welchem die Membran befestigt wird. Der Ultraschallsensor ist über das Sensorgehäuse an einer Halterung montierbar, die mit einem Verkleidungsteil des Kraftfahrzeugs verbunden wird. Das Sensorgehäuse weist eine in die Senderichtung der Membran weisende Frontseite und eine Rückseite auf, welche in eine zur Senderichtung entgegengesetzte rückwärtige Richtung weist, und wobei an der Frontseite das Sensorgehäuse mit einer frontseitigen Öffnung für die Membran ausgebildet wird, wobei die Frontseite des Sensorgehäuses mit einer aus einer Folie ausgebildeten Kappe verbunden wird, mit welcher die frontseitige Öffnung des Sensorgehäuses in die Senderichtung hin abgedeckt wird. Die Membran wird bereichsweise in eine Aufnahme der Kappe eingebracht und eine in die Senderichtung weisende Frontseite der Membran wird mit einem Boden der Aufnahme der Kappe verbunden.

Die meisten Ultraschallsensoren werden heutzutage nach dem oben beschriebenen Prinzip hergestellt. Zwar hat sich dieser Herstellungsprozess als besonders zuverlässig erwiesen, jedoch besteht eine weitere Herausforderung darin, den Herstellungsprozess der Ultraschallsensoren weiterhin zu vereinfachen, um insbesondere die Herstellungskosten zu reduzieren. Insbesondere haben sich dabei einerseits die Befestigung der Membran an dem Entkopplungselement und die Montage dieser Einheit an dem Sensorgehäuse sowie andererseits auch die Anbringung des weiteren Entkopplungsrings und der Schweißprozess mit dem Sensorgehäuse als relativ aufwändig erwiesen. Da heutzutage Ultraschallsensoren auch für Fahrzeuge in niedrigen Preissegmenten, wie beispielsweise in Kleinwagen, eingesetzt werden, besteht entsprechend ein Anpassungsbedarf an die Herstellungsprozesse.

Es ist Aufgabe der Erfindung, eine Lösung aufzuzeigen, wie bei einem Verfahren der eingangs genannten Gattung der Aufwand bei dem Herstellen des Ultraschallsensors im Vergleich zum Stand der Technik reduziert werden kann, ohne die Eigenschaften des Ultraschallsensors selbst zu beeinflussen, und/oder einen kostengünstigeren Sensor bereitzustellen.

Diese Aufgabe wird erfindungsgemäß durch ein Verfahren, durch einen Ultraschallsensor und durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Herstellen eines Ultraschallsensors für ein Kraftfahrzeug. Der Ultraschallsensor wird insbesondere zur sichtbaren Montage in einer durchgängigen Aussparung eines Verkleidungsteils des Kraftfahrzeugs ausgebildet. Für den Ultraschallsensor werden eine Membran zum Aussenden von Ultraschallsignalen in eine Senderichtung und ein Sensorgehäuse bereitgestellt. In und/oder an dem Sensorgehäuse wird die Membran befestigt. Über das Sensorgehäuse kann der Ultraschallsensor dann an einer Halterung montiert, beispielsweise eingerastet, werden, die mit dem Verkleidungsteil des Kraftfahrzeugs verbunden wird. Das Sensorgehäuse dient zum Unterbringen von Komponenten des Ultraschallsensors. Das Sensorgehäuse weist eine in die Senderichtung der Membran weisende Frontseite und eine Rückseite auf, welche in eine zur Senderichtung entgegengesetzte rückwärtige Richtung weist. Das Sensorgehäuse wird an der Frontseite mit einer frontseitigen Öffnung für die Membran ausgebildet. Erfindungsgemäß ist vorgesehen, dass die Frontseite des Sensorgehäuses mit einer aus einer Folie ausgebildeten Kappe verbunden wird, mit welcher die frontseitige Öffnung des Sensorgehäuses in die Senderichtung hin abgedeckt wird, wobei die Membran passgenau in die Kappe eingebracht wird und hierbei eine in die Senderichtung weisende Frontseite der Membran mit einem Boden der Aufnahme der Kappe verbunden wird.

Erfindungsgemäß wird also eine Folienkappe bzw. ein Folienhut und somit eine Abdeckung bereitgestellt, mittels welcher die frontseitige Öffnung des Sensorgehäuses in Abstrahlrichtung der Membran hin abgedeckt wird und welche eine dem Innenraum des Sensorgehäuses zugewandte Aufnahme aufweist, in welche die Frontseite der Membran, durch welche die Ultraschallsignale ausgesendet werden und welche in die Senderichtung zeigt, aufgenommen bzw. eingebracht wird. Durch die Abdeckung der Membran mittels der Kappe wird erreicht, dass keine zusätzliche Abdichtung benötigt wird und auch gegebenenfalls auf den Einsatz von separaten Entkopplungselementen verzichtet werden kann, über welche die Membran im Stand der Technik an dem Sensorgehäuse montiert wird. Die Membran wird nämlich über die eigensteife Kappe aus Folie an dem Sensorgehäuse befestigt und ist somit durch die Kappe vor äußeren Einflüssen zuverlässig geschützt. Die Kappe hat also den Vorteil, dass sich zusätzliche Maßnahmen hinsichtlich der Abdichtung des Sensorgehäuses an der Schnittstelle zwischen Membran und Sensorgehäuse mit den damit verbundenen Nachteilen hinsichtlich des Montageaufwands und der Kosten erübrigen. Es entstehen auch keine Probleme mit der Eisbildung im Betrieb des Ultraschallsensors. Außerdem braucht die Membran nicht mehr mit einem Oberflächenschutz beschichtet zu werden, wodurch der Aufwand bei der Herstellung weiterhin reduziert wird. Es verringert sich somit insgesamt der Herstellungsaufwand im Vergleich zum Stand der Technik, da die Membran lediglich in der Aufnahme der Kappe befestigt und die Kappe an dem Sensorgehäuse befestigt werden müssen.

Die Kappe bzw. der Folientopf wird vorzugsweise aus einem flachen Folienstreifen an einer Fertigungslinie ausgestanzt und dann in einem Werkzeug unter Wärmeeinwirkung tiefgezogen. Somit kann ein einfacher langer Folienstreifen erworben werden, ohne dass Lagerkosten oder aber Verpackungskosten anfallen. In vorteilhafter Weise kann der Folienstreifen einseitig mit einer Metallbeschichtung versehen sein, insbesondere mit einer Kupferbeschichtung, die nach dem Umformen zur Kappe sich an der dem Innenraum des Sensorgehäuses zugewandten Seite befindet.

Es kann hier auch auf den umlaufenden Kragen der Membran verzichtet werden, sodass die Membran topfförmig und kragenfrei ausgebildet wird. Ein Kragen zur Befestigung der Membran ist nämlich nicht mehr erforderlich.

Hinsichtlich der Reihenfolge der Montage und der damit verbundenen Montagerichtung können nun zwei alternative Ausführungsformen vorgesehen sein:
Zum einen kann die Membran in die Aufnahme der Kappe bereits vor dem Verbinden der Kappe mit dem Sensorgehäuse eingebracht und mit dem Boden der Aufnahme verbunden werden. Dann kann die Einheit aus Kappe und Membran mit der Frontseite des Sensorgehäuses verbunden und somit an dem Sensorgehäuse befestigt werden, insbesondere maßgenauer bzw. in engeren Toleranzen befestigt werden. Im Vergleich zum Stand der Technik kann die Membran somit ohne viel Aufwand über die Kappe an dem Sensorgehäuse montiert werden, ohne dass hierbei elastische bzw. weichelastische Entkopplungselemente gehandhabt und mit dem Gehäuse verschweißt zu werden brauchen. Zudem können auf diese Weise die Ultraschallsensoraußenmaße genau eingestellt werden.

Zum anderen kann jedoch auch vorgesehen sein, dass zunächst die Kappe mit der Frontseite des Sensorgehäuses verbunden wird und anschließend die Membran durch eine an der Rückseite des Sensorgehäuses ausgebildete rückseitige Montageöffnung in die Senderichtung in das Sensorgehäuse eingebracht und durch einen Innenraum und die frontseitige Öffnung des Sensorgehäuses hindurch in eine Montageposition an der Frontseite des Sensorgehäuses und somit in die Aufnahme der Kappe gebracht und in dieser Montageposition mit dem Boden der Aufnahme verbunden wird. Bei dieser Ausführungsform wird die Membran also nicht von der Frontseite des Sensorgehäuses montiert, sondern von der Rückseite und somit in Senderichtung bzw. in Abstrahlrichtung der Membran. Die Montage der Membran und der weiteren Komponenten des Ultraschallsensors kann somit lediglich von einer einzigen Montageseite durchgeführt werden, und zwar von der Rückseite durch die rückseitige Montageöffnung hindurch. Somit verringert sich der Herstellungsaufwand, da keine Komponenten in das Innere des Sensorgehäuses von der Frontseite eingebracht werden müssen. Dies reduziert neben dem Herstellungsaufwand auch die Herstellungskosten.

Erfindungsgemäß wird die Membran passgenau in die Aufnahme der Kappe aufgenommen. Dies bedeutet insbesondere, dass der Radius der Aufnahme der Kappe im Wesentlichen dem Außenradius der Membran entspricht und somit zumindest der frontseitige Abschnitt der Membran mit seinen Abmessungen und seiner Form an die Aufnahme der Kappe angepasst ist. Es entsteht somit auch eine formschlüssige Verbindung zwischen der Kappe und der Membran. Somit schwingt der Boden der Kappe grundsätzlich zusammen mit der Frontseite der Membran und beeinflusst somit nicht die Schwingungseigenschaften der Membran und verhindert auch nicht die Ausbreitung der Ultraschallsignale. Außerdem kann die Membran somit sehr stabil im Betrieb gehalten werden.

Die Kappe wird vorzugsweise aus einer Folie mit einer Dicke kleiner als 0,5 mm hergestellt, insbesondere mit einer Dicke von 0,2 oder 0,25 oder 0,3 mm. Eine solche besonders dünne Folie ermöglicht ebenfalls eine hindernisfreie Ausbreitung der Ultraschallsignale und beeinflusst somit nicht die Betriebsweise der Membran.

Die Kappe kann in einer Ausführungsform, insbesondere an einer dem Sensorgehäuse zugewandten Innenseite, mit einer Beschichtung aus Metall, insbesondere aus Kupfer, ausgebildet werden. Eine derartige metallische Beschichtung hat den Vorteil, dass die Kappe somit elektrisch leitend ausgebildet ist und eine besonders gute EMV-Abschirmung (elektromagnetische Verträglichkeit) bildet.

In einer Ausführungsform kann die Kappe mit einer Farblackschicht bedeckt sein, insbesondere in Fahrzeugfarbe und/oder in einer Farbe nach Kundenwunsch. Insbesondere kann bereits die Folie, aus der die Kappe gebildet wird, eine Folie mit Farblackschicht sein. Das heißt die Kappe kann auf der Außenseite farbig lackiert sein, so dass bei der Montage bereits ein Ultraschallsensor in der gewünschten Farbe montiert wird und eine nachträgliche Lackierung entfallen kann. Es kann somit ein hoch qualitativer Gesamteindruck des Verkleidungsteils des Kraftfahrzeugs ermöglicht werden. Somit kann eine einheitliche, nicht unterbrochene Farbgebung durch die Farblackschicht gewährleistet werden.

Bevorzugt wird die Frontseite der Membran über ein Klebepad mit dem Boden der Aufnahme der Kappe verbunden. Somit liegt die Frontseite der Membran über das Klebepad an der Innenseite des Bodens der Kappe an. Es kann dabei beispielsweise ein doppelseitiges Klebepad mit einer Dicke von 0,05 mm verwendet werden. Die Verwendung des Klebepads hat insbesondere den Vorteil, dass keine Dosierung eines Flüssigklebers und keine Warmaushärtung notwendig ist, wodurch die benötigte Herstellungszeit reduziert wird.

In einer Ausführungsform wird die Kappe auf die Frontseite des Sensorgehäuses aufgesteckt. Somit kann die Montage ohne viel Aufwand durchgeführt werden.

Es kann auch vorgesehen sein, dass die Kappe mit dem Sensorgehäuse verschweißt wird, insbesondere mittels eines Laserschweißgeräts. Durch den Schweißvorgang wird eine sehr feste und/oder dichte Verbindung geschaffen, welche auch größeren Kräften im Betrieb des Kraftfahrzeugs standhalten kann. Außerdem kann hier auf vorhandene Laseranlagen zugegriffen werden.

Es kann auch vorgesehen sein, dass ein Zwischenraum zwischen der Membran und dem Sensorgehäuse und/oder ein Innenraum der Membran mit einem Verguss, insbesondere mit einem Einkomponentenverguss, ausgefüllt wird. Es kann beispielsweise ein Silikonverguss, insbesondere ein Einkomponenten-Silikonverguss, und/oder ein Montageschaum, insbesondere ein Einkomponentenschaum, genutzt werden, wie beispielsweise der PU-Schaum. Es kann dann gegebenenfalls auf einen externen Entkopplungsring zwischen dem Ultraschallsensor und dem Verkleidungsteil des Fahrzeugs verzichtet werden. Der Vorteil eines Einkomponenten-Silikonvergusses besteht in den einfachen Anlagen und außerdem darin, dass der Verguss nicht schäumt.

Die Erfindung betrifft außerdem einen Ultraschallsensor für ein Kraftfahrzeug, mit einer Membran zum Aussenden von Ultraschallsignalen in eine Senderichtung, und mit einem Sensorgehäuse, in und/oder an welchem die Membran befestigt ist, wobei das Sensorgehäuse eine in die Senderichtung der Membran weisende Frontseite und eine Rückseite aufweist, welche in eine zur Senderichtung entgegengesetzte rückwärtige Richtung weist, und wobei an der Frontseite das Sensorgehäuse eine frontseitige Öffnung für die Membran aufweist. Die Frontseite des Sensorgehäuses ist mit einer aus einer Folie ausgebildeten Kappe verbunden, mit welcher die frontseitige Öffnung des Sensorgehäuses in die Senderichtung hin abgedeckt ist, wobei die Membran zumindest bereichsweise in einer Aufnahme der Kappe angeordnet ist und eine in die Senderichtung weisende Frontseite der Membran mit einem Boden der Aufnahme der Kappe verbunden ist.

Ein erfindungsgemäßes Kraftfahrzeug umfasst einen erfindungsgemäßen Ultraschallsensor.

Die mit Bezug auf das erfindungsgemäße Verfahren vorgestellten bevorzugten Ausführungsformen und deren Vorteile gelten entsprechend für den erfindungsgemäßen Ultraschallsensor sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele sowie unter Bezugnahme auf die beigefügten Zeichnungen näher erläutert.

Es zeigen:

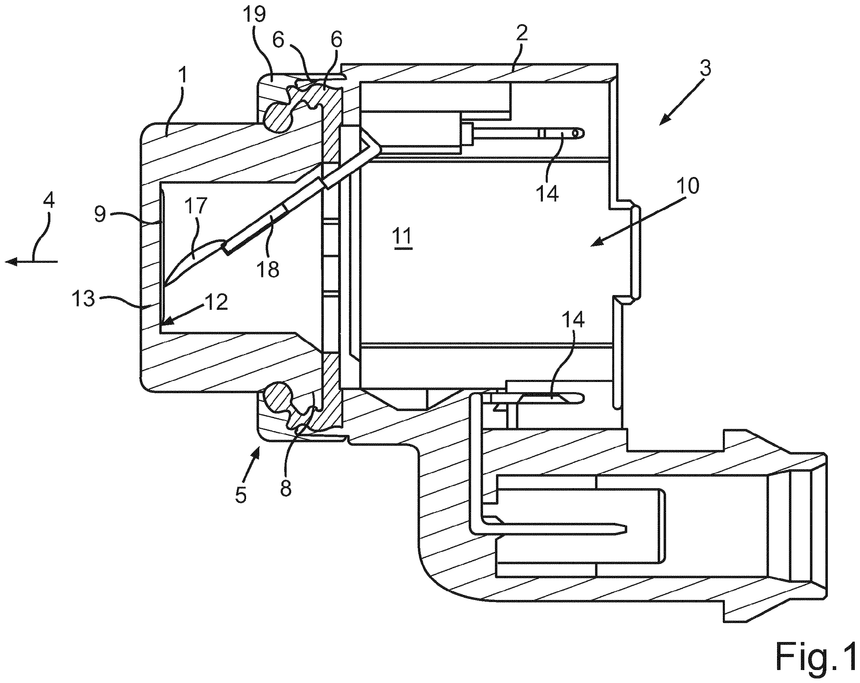

- Fig. 1: in schematischer Darstellung eine Schnittansicht durch einen Ultraschallsensor gemäß dem Stand der Technik; und
- Fig. 2: in schematischer Darstellung eine Schnittansicht durch einen Ultraschallsensor gemäß einer Ausführungsform der Erfindung.

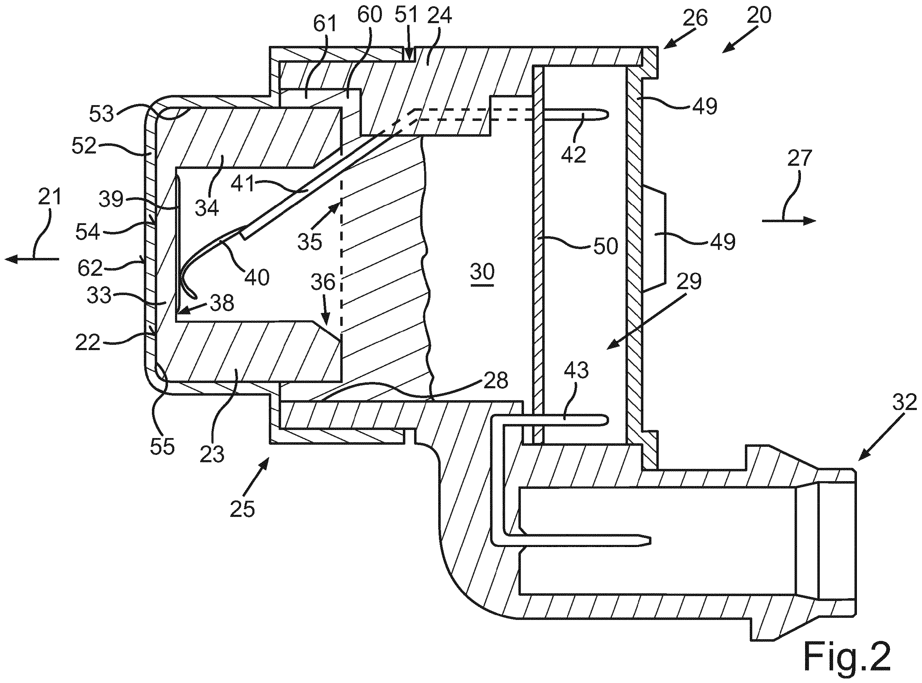

In Fig. 2 ist ein Ultraschallsensor 20 gemäß einer Ausführungsform der Erfindung gezeigt. Der Ultraschallsensor 20 ist zur Montage an einem Verkleidungsteil eines Kraftfahrzeugs vorgesehen, beispielsweise an einem Stoßfänger. Der Ultraschallsensor 20 ist dabei insbesondere zur sichtbaren und somit nicht verdeckten Montage an dem Verkleidungsteil vorgesehen, sodass nach der Montage an dem Verkleidungsteil eine in Senderichtung 21 einer Membran 23 weisende Frontseite 62 einer Kappe 52 von außerhalb des Kraftfahrzeugs sichtbar ist und beispielsweise mit der äußeren Fläche des Verkleidungsteils bündig abschließt. Es sollte jedoch verstanden werden, dass der Ultraschallsensor alternativ auch verdeckt verbaut sein kann. Der Ultraschallsensor ist dann bei einer Betrachtung des Verkleidungsteils von außen nicht sichtbar und durch das Verkleidungsteil verdeckt. In dem Fall wäre der Ultraschallsensor direkt hinter dem Verkleidungsteil verbaut und Ultraschallsignale würden durch das Material des Verkleidungsteils - üblicherweise Kunststoff - hindurch gesendet und empfangen.

Der Ultraschallsensor 20 umfasst ein Sensorgehäuse 24, in welchem die Komponenten des Ultraschallsensors 20 geschützt untergebracht sind. Über das Sensorgehäuse 24 kann der Ultraschallsensor 20 an dem Verkleidungsteils befestigt werden. Hierbei wird das Sensorgehäuse 24 beispielsweise mit einer Halterung verbunden und über die Halterung an dem Verkleidungsteil befestigt. Beispielsweise wird das Sensorgehäuse 24 in die Halterung eingerastet. Das Sensorgehäuse 24 ist einstückig ausgebildet und beispielsweise aus Kunststoff.

Das Sensorgehäuse 24 weist eine Frontseite 25 auf, welche in die Senderichtung 21 bzw. in Abstrahlrichtung der Membran 23 zeigt, wie auch eine Rückseite 26, welche in eine entgegengesetzte Richtung 27 zeigt. An der Frontseite 25 ist in dem Sensorgehäuse eine frontseitige Öffnung 28 ausgebildet, die eine Durchgangsöffnung ist. Entsprechend ist auch an der Rückseite 26 eine rückseitige Montageöffnung 29 ausgebildet. Im nichtmontierten Zustand ist ein Innenraum 30 des Sensorgehäuses 24 also lediglich in radialer Richtung und somit senkrecht zur Senderichtung 21 durch das Kunststoffmaterial begrenzt.

Das Sensorgehäuse 24 weist außerdem einen Stecker 32 auf, über welchen der Ultraschallsensor 20 mit einem Steuergerät des Kraftfahrzeugs elektrisch gekoppelt werden kann.

Die Membran 23 ist insgesamt topfförmig ausgebildet und zum Beispiel aus Aluminium. Die Membran 23 weist eine Frontseite 22 auf, welche in die Senderichtung 21 zeigt und durch welche die Ultraschallsignale ausgesendet werden. Die Membran 23 weist außerdem einen Membranboden 33 auf, welcher die Frontseite 22 aufweist, wie auch einen zylinderförmigen umlaufenden Mantel 34. An einer der Frontseite 22 gegenüberliegenden Rückseite 35 ist die Membran 23 offen und weist eine Öffnung 36 auf. Die Membran 23 ist ohne einen umlaufenden Kragen und somit kragenfrei ausgebildet.

An einer dem Innenraum 30 zugewandten Rückseite 38 des Membranbodens 33 ist ein Piezoelement 39 angeordnet, welches zum Anregen der Membran 23 ausgebildet ist. Das Piezoelement 39 wird über eine Litze 40 und ein elektrisches Kontaktelement 41 sowie einen Kontaktstift 42 mit elektrischer Energie versorgt.

Das Sensorgehäuse 24 wird an seiner Frontseite 25 mit einem umlaufenden Sitz 51 für die Kappe 52 ausgebildet. Mittels der Kappe 52 sind die frontseitige Öffnung 28 des Sensorgehäuses 24 und die Membran 23 verdeckt. Die Kappe 52 ist dabei aus einer Folie, insbesondere einer Kunststofffolie, ausgebildet. Sie ist in Form eines Folienbechers bzw. eines Folienhuts ausgeführt und weist eine Aufnahme 53 auf, in welche die Membran 23 passgenau eingebracht ist. Die Frontseite 22 der Membran 23 ist dabei über ein Klebepad 54 mit einer dem Innenraum 30 zugewandten Innenseite und somit einem Boden 55 der Kappe 52 verklebt. Die Form der Aufnahme 53 ist dabei an die Form der Membran 23 angepasst, sodass der Innendurchmesser der Aufnahme 53 im Wesentlichen dem Außendurchmesser der Membran 23 entspricht.

Die Kappe 52 ist auf den umlaufenden Sitz 51 des Sensorgehäuses 24 frontseitig axial aufgesteckt und mit dem Sensorgehäuse 24 mittels Lasers verschweißt.

Die Kappe 52 hat eine Dicke von beispielsweise 0,2 oder 0,25 mm.

Nachfolgend werden zwei alternative Verfahren zur Herstellung bzw. zur Montage des Ultraschallsensors 20 näher erläutert:
Bei beiden Verfahren werden zunächst das Sensorgehäuse 24, die Membran 23 und die Kappe 52 separat voneinander bereitgestellt. Die Kappe 52 kann dabei aus einem dünnen Folienstreifen an einer Fertigungslinie ausgestanzt und dann in einem Werkzeug heiß tiefgezogen werden. Dieser Folienstreifen ist einseitig mit einer Kupferbeschichtung versehen, die nach dem Umformen zur Kappe 52 sich in der Aufnahme 53 befindet und somit an der Innenseite liegt bzw. mit dem Klebepad 54 in Anlage gebracht wird.

Die Membran 23 wird ohne einen Verdrehschutzkragen hergestellt und braucht auch nicht beschichtet zu werden. Es wird also auf einen zusätzlichen Oberflächenschutz der Membran 23 verzichtet, da diese durch die Kappe 52 geschützt wird.

Gemäß dem ersten Verfahren wird nun die Membran 23 in die Aufnahme 53 der Kappe 52 mittels des Klebepads 54 lagerichtig eingeklebt und zwar ohne eine thermische Aushärtung. Dann kann die Kappe 52 zusammen mit der Membran 23 auf den umlaufenden Sitz 51 des Sensorgehäuses 24 aufgeschoben und mit diesem mittels eines Laserschweißgeräts verbunden werden.

Gemäß dem zweiten Verfahren wird zunächst die Kappe 52 mit dem Sensorgehäuse 24 oder alternativ mit einem in das Sensorgehäuse 24 eingesetzten separaten Halteelement verbunden. Dann wird die Membran 23 durch die rückseitige Montageöffnung 29 hindurch in den Innenraum 30 eingesetzt und hierdurch in die Montageposition an der Frontseite 25 gebracht und in die Aufnahme 53 der Kappe 52 aufgenommen. Um dies zu ermöglichen, wird der Kontaktstift 42 radial weiter nach außen verschoben, sodass der Innenraum 30 in radialer Richtung mindestens so groß wie der Außendurchmesser der Membran 23 ist und diese hindernisfrei in den Innenraum 30 eingesetzt und in die Montageposition verbracht werden kann.

Bei beiden Verfahren wird dann in einem weiteren Schritt das Piezoelement 39 montiert. Das Piezoelement 39 wird dabei von der Rückseite 26 durch die rückseitige Montageöffnung 29 in den Innenraum 30 eingebracht und an der Rückseite 38 des Membranbodens 33 positioniert, angedrückt und verklebt. Es kann hier beispielsweise ein Flüssigkleber verwendet werden, optional auch ein kalt aushärtender Klebstoff, welcher bevorzugt unter Luftabschluss aushärtet, wie dies in der DE 10 2011 120 391 A1 beschrieben ist. Alternativ kann auch ein Klebepad genutzt werden.

Dann kann das Kontaktelement 41 von dem Sensorgehäuse 24 gebogen werden, und es wird die Litze 40 angeschweißt und mit dem Piezoelement 39 verbunden.

Bei beiden Verfahren wird dann in einem weiteren Schritt ein Zwischenraum 61 zwischen der Membran 23 und dem Sensorgehäuse 24 und optional auch der Innenraum der Membran 23 sowie optional auch ein angrenzender Bereich des Innenraums 30 des Sensorgehäuses 24 mit einem Verguss 60 ausgefüllt. Es wird dabei vorzugsweise ein Einkomponentenverguss verwendet, wie insbesondere ein Einkomponentenschaum und/oder ein Einkomponenten-Silikonverguss.

In einem weiteren Montageschritt wird die Leiterplatte 50 auf die Kontaktstifte 42, 43 aufgesteckt bzw. aufgedrückt.

Es wird dann eine Leiterplatte 50 auf die Kontaktstifte 42, 43 aufgesteckt. Anschließend kann ebenfalls der Raum zwischen der Leiterplatte 50 und der Montageöffnung 29 mit einem Verguss ausgefüllt werden, wie beispielsweise einem Einkomponentenschaum und/oder einem Einkomponenten-Silikonverguss. Ergänzend oder alternativ zum Verguss kann auch ein Kunststoffdeckel 49, insbesondere in Form einer Kunststofffolie, verwendet werden, um die rückseitige Montageöffnung 29 zu verdecken. Dieser Kunststoffdeckel 49 kann beispielsweise mit dem Sensorgehäuse 24 mittels Ultraschall verschweißt werden.

Optional kann eine Innenseite des Deckels 49 bzw. der Folie mit einer Metallschicht, insbesondere aus Kupfer, versehen werden, welche dann als eine zusätzliche EMV-Abschirmung gilt.

## Patentansprüche

1. Verfahren zum Herstellen eines Ultraschallsensors (20) für ein Kraftfahrzeug, bei welchem für den Ultraschallsensor (20) eine Membran (23) zum Aussenden von Ultraschallsignalen in eine Senderichtung (21) und ein Sensorgehäuse (24) bereitgestellt werden, in und/oder an welchem die Membran (23) befestigt wird, wobei über das Sensorgehäuse (24) der Ultraschallsensor (20) an einer Halterung montierbar ist, die mit einem Verkleidungsteil des Kraftfahrzeugs verbunden wird, wobei das Sensorgehäuse (24) eine in die Senderichtung (21) der Membran (23) weisende Frontseite (25) und eine Rückseite (26) aufweist, welche in eine zur Senderichtung (21) entgegengesetzte rückwärtige Richtung (27) weist, und wobei an der Frontseite (25) das Sensorgehäuse (24) mit einer frontseitigen Öffnung (28) für die Membran (23) ausgebildet wird,
wobei die Frontseite (25) des Sensorgehäuses (24) mit einer aus einer Folie ausgebildeten Kappe (52) verbunden wird, mit welcher die frontseitige Öffnung (28) des Sensorgehäuses (24) in die Senderichtung (21) hin abgedeckt wird, wobei die Membran (23) zumindest bereichsweise in eine Aufnahme (53) der Kappe (52) eingebracht wird und hierbei eine in die Senderichtung (21) weisende Frontseite (22) der Membran (23) mit einem Boden (55) der Aufnahme (53) der Kappe (52) verbunden wird,
wobei die Methode **dadurch gekennzeichnet ist, dass**
die Membran (23) passgenau in die Aufnahme (53) aufgenommen wird, und die Kappe (52) auf die Frontseite (25) des Sensorgehäuses (24) aufgesteckt wird.

2. Verfahren nach Anspruch 1,
**dadurch gekennzeichnet, dass**
vor dem Verbinden der Kappe (52) mit dem Sensorgehäuse (24) die Membran (23) in die Aufnahme (53) der Kappe (52) eingebracht und mit dem Boden (55) der Aufnahme (53) verbunden wird.

3. Verfahren nach Anspruch 1,
**dadurch gekennzeichnet, dass**
zunächst die Kappe (52) mit der Frontseite (25) des Sensorgehäuses (24) verbunden wird und anschließend die Membran (23) durch eine an der Rückseite (26) des Sensorgehäuses (24) ausgebildete rückseitige Montageöffnung (29) in die Senderichtung (21) in das Sensorgehäuse (24) eingebracht und durch einen Innenraum (30) und die frontseitige Öffnung (28) des Sensorgehäuses (24) hindurch in eine Montageposition an der Frontseite (25) des Sensorgehäuses (24) gebracht und in der Montageposition mit dem Boden (55) der Aufnahme (53) verbunden wird.

4. Verfahren nach einem der vorhergehenden Ansprüche,
**dadurch gekennzeichnet, dass**
die Kappe (52) aus einer Folie mit einer Dicke kleiner als 0,5 mm hergestellt wird.

5. Verfahren nach einem der vorhergehenden Ansprüche,
**dadurch gekennzeichnet, dass**
die Kappe (52)mit einer Beschichtung aus Metallausgebildet wird.

6. Verfahren nach Anspruch 5, **dadurch gekennzeichnet, dass** die Kappe (52) an einer dem Sensorgehäuse (24) zugewandten Innenseite (55) mit einer Beschichtung aus Metall ausgebildet ist.

7. Verfahren nach Anspruch 5 oder 6, **dadurch gekennzeichnet, dass** die Kappe (52) mit einer Beschichtung aus Kupfer ausgebildet ist.

8. Verfahren nach einem der vorhergehenden Ansprüche,
**dadurch gekennzeichnet, dass**
die Frontseite (22) der Membran (23) über ein Klebepad (54) mit dem Boden (55) der Aufnahme (53) der Kappe (52) verbunden wird.

9. Verfahren nach einem der vorhergehenden Ansprüche,
**dadurch gekennzeichnet, dass**
die Kappe (52) mit dem Sensorgehäuse (24) verschweißt wird.

10. Verfahren nach einem der vorhergehenden Ansprüche,
**dadurch gekennzeichnet, dass**
ein Zwischenraum (61) zwischen der Membran (23) und dem Sensorgehäuse (24) und/oder ein Innenraum der Membran (23) mit einem Verguß (60)ausgefüllt wird.

11. Verfahren nach Anspruch 10, **dadurch gekennzeichnet, dass** der Zwischenraum (61) zwischen der Membran (23) und dem Sensorgehäuse (24) und/oder der Innenraum der Membran (23) mit einem Einkomponentenverguß ausgefüllt ist.

12. Ultraschallsensor (20) für ein Kraftfahrzeug, mit einer Membran (23) zum Aussenden von Ultraschallsignalen in eine Senderichtung (21), und mit einem Sensorgehäuse (24), in und/oder an welchem die Membran (23) befestigt ist, wobei über das Sensorgehäuse (24) der Ultraschallsensor (20) an einer Halterung montierbar ist, die mit einem Verkleidungsteil des Kraftfahrzeugs verbunden wird, wobei das Sensorgehäuse (24) eine in die Senderichtung (21) der Membran (23) weisende Frontseite (25) und eine Rückseite (26) aufweist, welche in eine zur Senderichtung (21) entgegengesetzte rückwärtige Richtung (27) weist, und wobei an der Frontseite (25) das Sensorgehäuse (24) eine frontseitige Öffnung (28) für die Membran (23) aufweist,
wobei die Frontseite (25) des Sensorgehäuses (24) mit einer aus einer Folie ausgebildeten Kappe (52) verbunden ist, mit welcher die frontseitige Öffnung (28) des Sensorgehäuses (24) in die Senderichtung (21) hin abgedeckt ist, wobei die Membran (23) zumindest bereichsweise in einer Aufnahme (53) der Kappe (52) angeordnet ist und eine in die Senderichtung (21) weisende Frontseite (22) der Membran (23) mit einem Boden (55) der Aufnahme (53) der Kappe (52) verbunden ist,
wobei der Ultraschallsensor **dadurch gekennzeichnet ist, dass**
die Membran (23) passgenau in die Aufnahme (53) aufgenommen ist, und die Kappe (52) auf die Frontseite (25) des Sensorgehäuses (24) aufgesteckt ist.

13. Kraftfahrzeug mit einem Ultraschallsensor (20) nach Anspruch 12.

## Claims

1. Method for producing an ultrasound sensor (20) for a motor vehicle, in which method, for the ultrasound sensor (20), a diaphragm (23) for emitting ultrasound signals in an emitting direction (21) and a sensor housing (24) are provided, in and/or on which sensor housing the diaphragm (23) is fastened, wherein by way of the sensor housing (24), the ultrasound sensor (20) can be installed on a bracket which is connected to a panelling part of the motor vehicle, wherein the sensor housing (24) has a front side (25), which points in the emitting direction (21) of the diaphragm (23), and a rear side (26), which points in a rearward direction (27) which is opposite to the emitting direction (21), and wherein, on the front side (25), the sensor housing (24) is formed with a front-side opening (28) for the diaphragm (23),
wherein the front side (25) of the sensor housing (24) is connected to a cap (52) which is composed of a foil and by way of which the front-side opening (28) of the sensor housing (24) is covered in the emitting direction (21), wherein the diaphragm (23) is inserted at least regionally into a receptacle (53) of the cap (52) and, here, a front side (22), which points in the emitting direction (21), of the diaphragm (23) is connected to a base (55) of the receptacle (53) of the cap (52),
wherein the method is **characterized in that**
the diaphragm (23) is received in the receptacle (53) with an accurate fit, and the cap (52) is mounted onto the front side (25) of the sensor housing (24).

2. Method according to Claim 1,
**characterized in that**,
before the connection of the cap (52) to the sensor housing (24), the diaphragm (23) is inserted into the receptacle (53) of the cap (52) and is connected to the base (55) of the receptacle (53).

3. Method according to Claim 1,
**characterized in that**,
firstly, the cap (52) is connected to the front side (25) of the sensor housing (24), and subsequently, the diaphragm (23) is inserted in the emitting direction (21) into the sensor housing (24) through a rear-side installation opening (29) which is formed on the rear side (26) of the sensor housing (24), and said diaphragm is placed, through an interior space (30) and the front-side opening (28) of the sensor housing (24), into an installed position at the front side (25) of the sensor housing (24), and said diaphragm is connected, in the installed position, to the base (55) of the receptacle (53).

4. Method according to one of the preceding claims,
**characterized in that**
the cap (52) is produced from a foil with a thickness of less than 0.5 mm.

5. Method according to one of the preceding claims,
**characterized in that**
the cap (52) is formed with a coating composed of metal.

6. Method according to Claim 5,
**characterized in that**
the cap (52) is, on an inner side (55) facing toward the sensor housing (24), formed with a coating composed of metal.

7. Method according to Claim 5 or 6,
**characterized in that**
the cap (52) is formed with a coating composed of copper.

8. Method according to one of the preceding claims,
**characterized in that**
the front side (22) of the diaphragm (23) is connected to the base (55) of the receptacle (53) of the cap (52) by way of an adhesive pad (54).

9. Method according to one of the preceding claims,
**characterized in that**
the cap (52) is welded to the sensor housing (24).

10. Method according to one of the preceding claims,
**characterized in that**
an intermediate space (61) between the diaphragm (23) and the sensor housing (24) and/or an interior space of the diaphragm (23) is filled with a sealing compound (60).

11. Method according to Claim 10,
**characterized in that**
the intermediate space (61) between the diaphragm (23) and the sensor housing (24) and/or the interior space of the diaphragm (23) is filled with a single-component sealing compound.

12. Ultrasound sensor (20) for a motor vehicle, having a diaphragm (23) for emitting ultrasound signals in an emitting direction (21), and having a sensor housing (24), in and/or on which the diaphragm (23) is fastened, wherein by way of the sensor housing (24), the ultrasound sensor (20) can be installed on a bracket which is connected to a panelling part of the motor vehicle, wherein the sensor housing (24) has a front side (25), which points in the emitting direction (21) of the diaphragm (23), and a rear side (26), which points in a rearward direction (27) which is opposite to the emitting direction (21), and wherein, on the front side (25), the sensor housing (24) has a front-side opening (28) for the diaphragm (23),
wherein the front side (25) of the sensor housing (24) is connected to a cap (52) which is composed of a foil and by way of which the front-side opening (28) of the sensor housing (24) is covered in the emitting direction (21), wherein the diaphragm (23) is arranged at least regionally in a receptacle (53) of the cap (52) and a front side (22), which points in the emitting direction (21), of the diaphragm (23) is connected to a base (55) of the receptacle (53) of the cap (52),
wherein the ultrasound sensor is **characterized in that**
the diaphragm (23) is received in the receptacle (53) with an accurate fit, and the cap (52) is mounted onto the front side (25) of the sensor housing (24).

13. Motor vehicle having an ultrasound sensor (20) according to Claim 12.

## Revendications

1. Procédé de fabrication d'un capteur à ultrasons (20) d'un véhicule automobile, capteur dans lequel une membrane (23) destinée à émettre des signaux ultrasonores dans une direction d'émission (21) et un boîtier de capteur (24) sont prévus pour le capteur à ultrasons (20), boîtier dans et/ou sur lequel la membrane (23) est fixée, le capteur à ultrasons (20) pouvant être monté par le biais du boîtier de capteur (24) sur un support qui est relié à une partie d'habillage du véhicule automobile, le boîtier de capteur (24) comportant une face avant (25), pointant dans la direction d'émission (21) de la membrane (23), et une face arrière (26) pointant dans une direction arrière (27) opposée à la direction d'émission (21), et le boîtier de capteur (24) étant pourvu sur la face avant (25) d'une ouverture avant (28) destinée à la membrane (23),
la face avant (25) du boîtier de capteur (24) étant reliée à un capuchon (52) formé à partir d'un film et recouvrant l'ouverture avant (28) du boîtier de capteur (24) dans la direction d'émission (21), la membrane (23) étant au moins partiellement introduite dans un logement (53) du capuchon (52) et une face avant (22), pointant dans la direction d'émission (21), de la membrane (23) étant ainsi reliée à un fond (55) du logement (53) du capuchon (52),
le procédé étant **caractérisé en ce que**
la membrane (23) est reçue précisément dans le logement (53) et le capuchon (52) est emboîté sur la face avant (25) du boîtier de capteur (24).

2. Procédé selon la revendication 1,
**caractérisé en ce que**
avant de relier le capuchon (52) au boîtier de capteur (24), la membrane (23) est introduite dans le logement (53) du capuchon (52) et est reliée au fond (55) du logement (53).

3. Procédé selon la revendication 1,
**caractérisé en ce que**
le capuchon (52) est d'abord relié à la face avant (25) du boîtier de capteur (24) puis la membrane (23) est introduite dans le boîtier de capteur (24) dans la direction d'émission (21) par une ouverture de montage arrière (29) formée au niveau de la face arrière (26) du boîtier de capteur (24) et est passée à travers un espace intérieur (30) et l'ouverture avant (28) du boîtier de capteur (24) dans une position de montage au niveau de la face avant (25) du boîtier de capteur (24) et est reliée dans la position de montage au fond (55) du logement (53).

4. Procédé selon l'une des revendications précédentes,
**caractérisé en ce que**
le capuchon (52) est fabriqué à partir d'un film d'épaisseur inférieure à 0,5 mm.

5. Procédé selon l'une des revendications précédentes,
**caractérisé en ce que**
le capuchon (52) est pourvu d'un revêtement métallique.

6. Procédé selon la revendication 5, **caractérisé en ce que** le capuchon (52) est pourvu d'un revêtement métallique sur un côté intérieur (55) dirigé vers le boîtier de capteur (24).

7. Procédé selon la revendication 5 ou 6, **caractérisé en ce que** le capuchon (52) est pourvu d'un revêtement en cuivre.

8. Procédé selon l'une des revendications précédentes, **caractérisé en ce que** la face avant (22) de la membrane (23) est reliée au fond (55) du logement (53) du capuchon (52) par le biais d'une pastille adhésive (54).

9. Procédé selon l'une des revendications précédentes, **caractérisé en ce que** le capuchon (52) est soudé au boîtier de capteur (24).

10. Procédé selon l'une des revendications précédentes, **caractérisé en ce qu'**un espace intermédiaire (61) entre la membrane (23) et le boîtier de capteur (24) et/ou un espace intérieur de la membrane (23) est rempli d'un composé de remplissage (60) .

11. Procédé selon la revendication 10, **caractérisé en ce que** l'espace intermédiaire (61) entre la membrane (23) et le boîtier de capteur (24) et/ou l'espace intérieur de la membrane (23) est rempli d'un composé de remplissage mono-composant.

12. Capteur à ultrasons (20) destiné à un véhicule automobile, ledit capteur comprenant une membrane (23) destinée à émettre des signaux ultrasonores dans une direction d'émission (21), et un boîtier de capteur (24) dans et/ou sur lequel la membrane (23) est fixée, le capteur à ultrasons (20) pouvant être monté par le biais du boîtier de capteur (24) sur un support qui est relié à une partie d'habillage du véhicule automobile, le boîtier de capteur (24) comportant une face avant (25), pointant dans la direction d'émission (21) de la membrane (23), et une face arrière (26) pointant dans une direction arrière (27) opposée à la direction d'émission (21), et le boîtier de capteur (24) étant pourvu sur la face avant (25) d'une ouverture avant (28) destinée à la membrane (23),
la face avant (25) du boîtier de capteur (24) étant reliée à un capuchon (52) formé à partir d'un film et recouvrant l'ouverture avant (28) du boîtier de capteur (24) dans la direction d'émission (21), la membrane (23) étant au moins partiellement disposée dans un logement (53) du capuchon (52) et une face avant (22), pointant dans la direction d'émission (21), de la membrane (23) étant reliée à un fond (55) du logement (53) du capuchon (52),
le procédé étant **caractérisé en ce que**
la membrane (23) est reçue précisément dans le logement (53) et le capuchon (52) est emboîté sur la face avant (25) du boîtier de capteur (24).

13. Véhicule automobile comprenant un capteur à ultrasons (20) selon la revendication 12.
